# EUROPEAN PATENT SPECIFICATION

(11) **EP 0 402 441 B1**
(45) Date of publication and mention of the grant of the patent: **07.10.1998**
(21) Application number: 90900651.2
(22) Date of filing: 06.12.1989
(51) Int. Cl.: B01D 29/01, B01D 29/64, B01D 29/86

(54) **NUTSCHE PROCESS FILTER DRIVE UNIT**
FILTERANTRIEB FÜR NUTSCHENVERFAHREN
UNITE D'ENTRAINEMENT POUR FILTRE DE SUCTION

(30) Priority: 20.12.1988 US 286959
(43) Date of publication of application: 19.12.1990
(73) Proprietor: SPARKLER FILTERS, INC., Conroe, TX 77305 (US)
(72) Inventor: RENEAU, James, T., Jr., Willis, TX 77378 (US)
(74) Representative: Dost, Wolfgang, Dr.rer.nat., Dipl.-Chem.
(86) International application number: US8905540
(87) International publication number: WO9006798

(56) References cited:
- EP-A- 0 271 985
- GB-A- 2 084 890
- US-A- 4 081 381

## Description

The invention relates to a drive unit for a nutsche process filter. More specifically, the invention relates to drive units that make such filters more compact and subject to less wear.

Nutsche filters are used to react, wash, dry, separate, filter and otherwise process liquid solutions. Such processing may cause the formation of cakes. The Nutsche filters are capable of stirring, shaving, discharging or smoothing ("processing") the cakes.

US-A-4 081 381 refers to a nutsche-type filter, comprising an enclosed filter vessel, a laterally disposed filter plate, a top opening, a drain in the bottom and an impeller being rotatably arranged inside the filter vessel. The drive shaft is moved up and down by a drive mechanism, comprising posts which extend translating a motor and extending the cylinders. Therefore, the height of the drive unit varies so that the unit take much vertical space.

Some Nutsche filters operate by lowering a turning impeller into the filter vessel containing the liquid solution. In prior art systems, the impeller shaft is typically driven by a reversible motor where rotational motion is translated from the motor through a gear arrangement to the shaft.

In operation, the impeller is lowered into and lifted out of the liquid solution by hydraulic arms. Typically, the arms are connected to the top of the shaft by a yoke. The hydraulic arms, motor and gear arrangement comprise the nutsche filter drive system. The drive system is capable of operating the nutsche filter. However, there are some drawbacks.

Existing nutsche filter drives require that either the motor and gear drive or drive shaft be raised from their lowest position above the filter vessel in order to raise the impeller shaft and impellers which are contained within the vessel. The present invention eliminates having to raise the drive shaft, gear drive or motor from their fixed positions above the filter. Thus, the drive components become stationary items.

Another drawback involves the height of the nutsche filter. Many nutsche filters stand over 15 feet high. The drive unit is disposed on top of the vessel and space must be allowed for travel of the motor and speed reducer or shaft when raising the impeller. The vertical space required for operation may make it difficult, if not impossible, to operate in many buildings. Furthermore, the shaft may be exposed to dirt and corrosion when lifting the impeller.

The problems identified with the present nutsche filter drive system are meant to be illustrative and are not exhaustive. Rather, this discussion is intended to show potential areas of improvement. These problems are solved by the invention defined in claim 1.

In general, the present invention comprises a nutsche filter unit in which the upper end of the drive shaft assembly is fixed vertically, and the drive unit components are protected from the environment. The drive unit comprises a telescoping drive shaft assembly that raises and lowers the impeller without vertical movement of the upper end of the drive shaft assembly. The drive unit is capable of varying the speed or direction of the impeller during vertical movement of the impeller.

The compact nature of the drive unit enables it to be sealed from the environment and lubricated. This lubrication reduces shaft and seal wear.

In a broad aspect, the present invention comprises a drive system for a nutsche filter that includes a telescoping shaft attachable at its lower end to an impeller. The upper end of the shaft is coupled to a suitable power source. The shaft assembly includes an upper drive shaft section or assembly and a lower impeller shaft section or assembly that rotate together but which move vertically relative to one another. A spline arrangement positioned between the two shaft sections provides for both types of movement.

A power transmission system working through the hollow portion of the shaft operates to move the impeller shaft section vertically. The power transmission system may be either hydraulic or mechanical, but is preferably hydraulic. In the hydraulic embodiment a reversible hydraulic fluid circuit is provided in the hollow drive shaft section which conveys hydraulic fluid up and down the drive shaft to effect vertical movement of the impeller shaft. The up and down flow occurs in two separate flow paths established in the drive shaft.

Structurally, the present invention preferably comprises a hydraulic powered drive unit for a nutsche filter. This drive unit includes a hydraulic motor, speed reducer, shaft, guide assembly and drive shaft assembly.

The drive unit is disposed on, in and below a drive housing that is disposed on top of the filter vessel. The motor is rotatively coupled to the speed reducer, and preferably both of these components are disposed on top of the drive housing.

The guide assembly is disposed in the vessel below the drive housing. The guide assembly is adapted to receive the drive shaft assembly.

The drive shaft assembly is connected at one end to the speed reducer. The drive shaft assembly includes the drive shaft, a top flange, a sleeve and the impeller shaft.

The drive shaft is coupled to the speed reducer and disposed inside the drive housing. In a preferred embodiment of the invention, the drive shaft includes a 2-stage bore, at least one horizontal passageway and external splines. A tube is disposed inside the bore to separate the stages. A hydraulic coupling is disposed on top of the shaft to provide fluid communication from a hydraulic pump and reservoir to the shaft bore through the different stages.

The top flange is disposed around the shaft and includes a shoulder and neck. An O-ring or other suitable seal is disposed between the top flange neck and shaft to ensure proper sealing.

The sleeve is disposed around the shaft, adjacent to and below the top flange. The sleeve includes internal splines that engage the external splines of the drive shaft.

The impeller shaft is disposed around the sleeve and is slideable through the guide assembly. The impeller shaft is connected to the sleeve and top flange at or near the top of the impeller shaft. A first packing or other suitable seal is disposed between the guide assembly and the impeller shaft to ensure proper sealing. A second packing or other suitable seal is also disposed between the drive shaft and the internal diameter of the impeller shaft to ensure proper sealing between the drive shaft and the impeller shaft.

The above, preferred form of the present invention operates with the impeller in its "up" position as follows. The motor is actuated to impart rotational motion to the drive shaft through the speed reducer. Hydraulic fluid is pumped through the coupling and tube and out the bottom of the shaft. The fluid fills the space between the bottom of the second packing and the bottom of the hollow impeller shaft. That action lowers the impeller within the filter vessel.

When processing is completed, the impeller is raised. Raising the impeller shaft is accomplished by directing hydraulic fluid through the drive shaft bore around the out side of the tube and through a lateral passageway into the space between the impeller and drive shafts and above the second packing. Pumping fluid into that space causes the impeller to raise.

The present invention provides several features not found in the prior art. For instance, the sleeve and the impeller shaft travel along the drive shaft, where the overall shaft assembly is enclosed. That arrangement:
(1) reduces the vertical space required for operation of the filter;
(2) protects the moving parts from wear and exposure to dirt and corrosion; and
(3) eliminates vertical movement of the drive shaft, motor or drive mechanism.

The filter may be driven rotationally by a single hydraulic motor. Preferably the motor is mounted on top of the housing. The motor and speed reducer are both commercially available from a number of manufacturers. This arrangement provides several advantages including ease of repair, availability and convenience.

Vertical movement of the impeller shaft relative to the drive shaft may also be accomplished by a threaded screw or any other suitable mechanical arrangement.

The features and advantages identified are meant to be illustrative not exhaustive. Additional features and advantages will become evident to those of ordinary skill in the art when reviewing the drawings in view of detailed description of the preferred embodiments.

Figure 1 is a perspective, partially cutaway view of a nutsche filter incorporating the invention.

Figure 2 is a cross sectional view of the filter of the preferred embodiment with the impeller in the down position.

Figure 3 is an enlarged partial cross sectional view of a portion of the filter emphasizing the relationship between the drive shaft and the impeller shaft.

Figure 4 is a cross sectional view along line 4-4 in Figure 3.

Figure 5 is a partial, cross sectional view of the filter having a screw actuated drive unit.

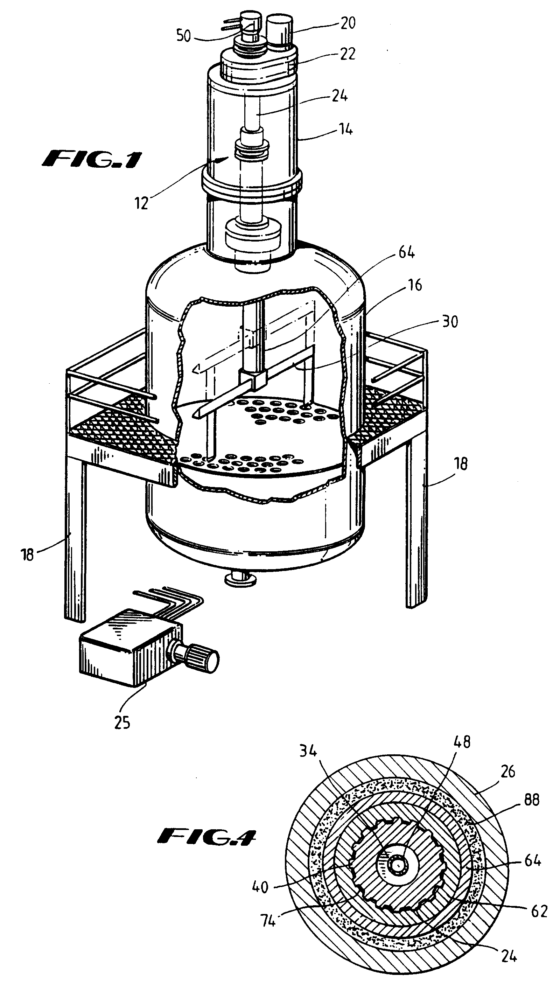

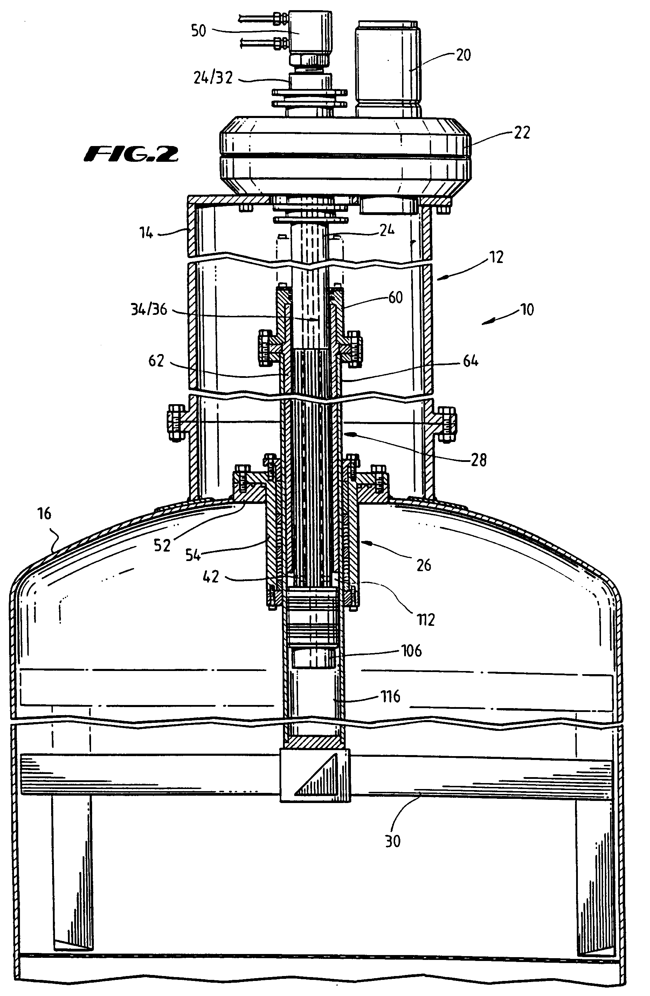

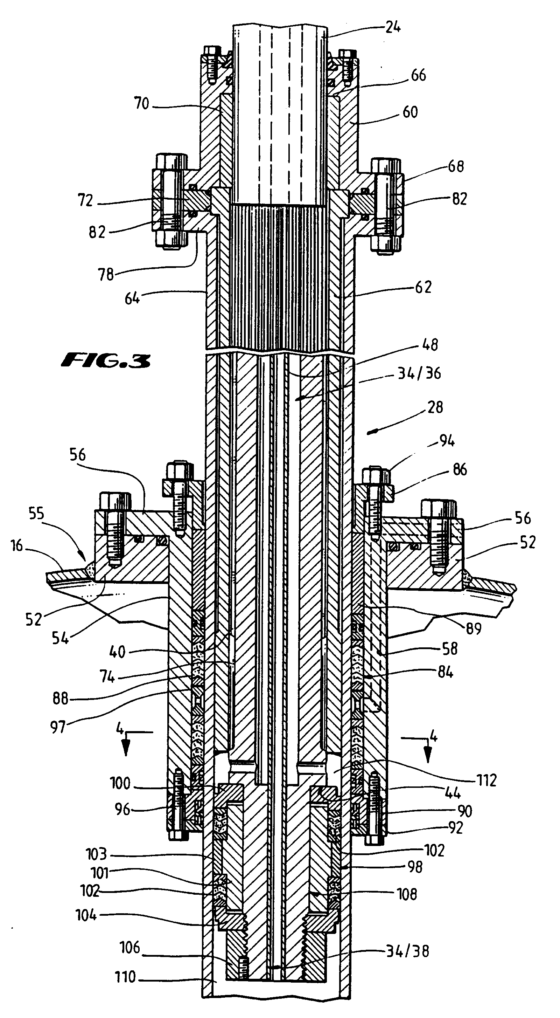

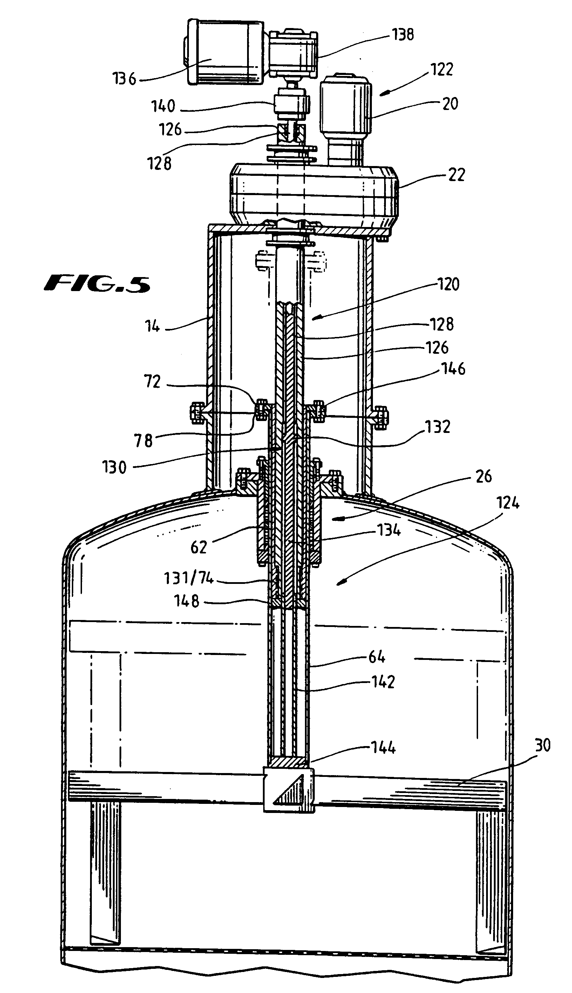

A nutsche process filter 10 of the present invention is shown in Fig. 1. Filter 10 includes a drive unit 12, housing 14, vessel 16 and legs 18. A preferred embodiment incorporating a hydraulic drive is shown in Figures 2-4. A second embodiment of the invention incorporating a screw-actuated impeller lift mechanism is shown in Figure 5.

### Hydraulic Drive

Drive unit 12 is disposed partially on top of and inside housing 14, and partially inside the vessel 16. Drive unit 12 comprises a motor 20, speed reducer 22, shaft 24, guide assembly 26, drive shaft assembly 28 and impeller 30.

Motor 20 and speed reducer 22 are disposed on top of the housing 14. Preferably, motor 20 is hydraulic; however, electrical, mechanical or other drive means are also acceptable. Speed reducer 22 is rotatively coupled to motor 20.

Drive shaft 24 is rotatively coupled to speed reducer 22 and is in fluid communication with a separate hydraulic power source 25 (See Figure 1). Drive shaft 24 includes a top 32, a bore 34 having an upper stage 36 and a lower stage 38, at least one spline 40, at least one passageway 42, a shoulder 44 and threads 46.

A tube 48 is disposed inside the two-stage bore where tube 48 isolates upper stage 36 from the lower stage 38. A rotary union or coupling 50 is disposed on top 32 of shaft 24 in fluid communication with bore 34.

Guide assembly 26 is disposed on top and inside of vessel 16 and adapted to receive drive shaft assembly 28. Guide assembly 26 includes ring 52 and flange 54. Ring 52 is disposed in an opening 55 in the top of vessel 16. Flange 54 is disposed inside and on top of ring 52. Flange 54 includes a shoulder 56 and passageway 58 and is secured to ring 52.

Impeller shaft assembly 28 is slideably disposed around drive shaft 24 and through guide assembly 26. Impeller shaft assembly 28 includes a top flange 60, sleeve 62 and impeller shaft 64. Top flange 60 includes neck 66 and shoulder 68.

Top flange 60 is disposed around shaft 24 where neck 66 is disposed next to shaft 24 in sliding relation. Bushing 70 is disposed between the remaining portion of top flange 60 and shaft 24.

Sleeve 62 is disposed around shaft 24 beneath top flange 60. Sleeve 62 includes shoulder 72 and internal splines 74. Internal splines 74 of sleeve 62 slideably engage splines 40 of drive shaft 24.

Impeller shaft 64 is disposed around sleeve 62 and through guide assembly 26. A shoulder 78 is disposed around the top of impeller shaft 64. The impeller 30 is connected to the bottom of impeller shaft 64. The bottom of impeller shaft 64 is sealed.

Shoulder 72 of sleeve 62 is disposed between shoulder 68 of top flange 60 and shoulder 78 of impeller shaft 64. Those three components are connected to each other by a fastening means 82, preferably a nut and bolt arrangement.

A first packing assembly 84 is disposed between guide assembly 26 and impeller shaft 64. Packing assembly 84 includes a compression flange 86, packing 88, bushing 89 bottom flange 90 and sealing ring 92. Compression flange 86 is connected to the guide flange 54 by fastening means 94, preferably bolts. The sealing ring 92 and bottom flange 90 are connected to the guide flange 54 by a fastening means 96, preferably bolts. Packing 88 is disposed between the compression flange 86 and bottom flange 90. Preferably packing 88 includes a lantern ring 97 for fluid and pressure relief.

A second packing assembly 98 is disposed between impeller shaft 64 and the bottom portion of drive shaft 24. The packing assembly 98 includes upper locating ring 100, spacing ring 101, packing 102, bushing 103, lower locating ring 104 and nut 106. Upper locating ring 100 is disposed against a shoulder 44 in drive shaft 24. Packing 102 is disposed between upper locating ring 100 and lower locating ring 104. Nut 106 is threaded on drive shaft 24 to hold the packing assembly 98 in place.

Drive unit 12 operates as follows. Motor 20 is actuated and engages speed reducer 22 to impart rotational motion into drive shaft 24. As shaft 24 rotates, fluid may be pumped by a power source 25 through tube 48 into a space 110 between second packing assembly 98 and the bottom of impeller shaft 64. As space 110 is filled, the fluid pushes on the bottom of impeller shaft 64. That forces the impeller shaft 64 to slide on drive shaft 24, lowering the impeller 30.

When processing is complete, the impeller 30 is raised. Impeller 30 is raised by feeding hydraulic fluid outside tube 48 and through upper stage 36 of bore 34. The fluid travels through passageway 42 into the space 112 between packing assembly 98 and an O-ring or other suitable seal in top flange 60, forcing the impeller shaft 64 to rise on drive shaft 24.

Significant to the invention, as shown in Figures 1-4 is the ability of the sleeve 62 to slide along the drive shaft 24 independent of rotary movement of impeller shaft 64 with drive shaft 24. These independent motions of the impeller shaft 64 are especially helpful when conducting filtration in a nutsche filter.

### Screw Drive

A second embodiment of the inventive drive unit 12 is shown in Figure 5. The screw actuated drive unit 12 comprises a two piece shaft 120, motor assembly 122, a guide assembly 26, a threaded impeller drive shaft assembly 124 and the impeller 30. This embodiment is generally similar to the embodiment of Figs. 1-4. The principal differences include the two piece shaft 120, motor assembly 122 and drive shaft assembly 124. The remainder of the drive unit 12 is substantially the same as the preferred first embodiment of Figs. 1-4.

Two piece drive shaft assembly 120 includes drive shaft 126 and threaded shaft 128. Drive shaft 126 includes bore 130 and external splines 131. Threaded shaft 128 is rotateably disposed in bore 130 of drive shaft shaft 126, where shafts 126 and 128 may rotate independently of one another. Threaded shaft 128 includes a collar 132 and threaded section 134.

Motor assembly 122 is disposed on top of housing 14 and includes the motor 20 and speed reducer 22, a threaded shaft motor 136, gear reducer 138 and clutch 140. Threaded shaft motor 136 is rotateably coupled with gear reducer 138 which is rotateably coupled to clutch 140.

Drive shaft 126 is rotateably coupled with speed reducer 22 in the same fashion as drive shaft 24. Threaded shaft 128 is rotateably coupled to, and is held in a fixed vertical position by clutch 140.

Impeller shaft assembly 124 is slideably disposed around drive shaft 126 and through guide assembly 26. Impeller shaft assembly 124 includes sleeve 62, impeller shaft 64, drive shaft assembly 120, and a stroke tube 142.

Sleeve 62 is disposed around drive shaft 126. Sleeve 62 includes a shoulder 72 and internal splines 74. Internal splines 74 slideably engage splines 131 of drive shaft 126.

Impeller shaft 64 is disposed around sleeve 62 and through guide assembly 26. Impeller shaft 64 includes shoulder 78 and base plate 144. Base plate 144 seals the bottom of impeller shaft 64. The bottom of shoulder 72 of sleeve 62 is connected to the top of shoulder 78 of impeller shaft 64 by suitable fastening means 146.

A bushing 148 is connected to the bottom of drive shaft 126 and is adapted to receive threaded stroke tube 142.

Threaded stroke tube 142 is connected at one end to the base plate 144, and the other end extends through bushing 148. Stroke tube 142 includes internal threads adapted to receive the threaded portion 134 of threaded shaft 128.

This embodiment operates in the same fashion as the first preferred embodiment but for the manner of vertical displacement of the impeller shaft. The vertical displacement of the impeller shaft in this embodiment operates as follows. The threaded shaft motor 136 is actuated. Clutch 140 engages and rotates threaded shaft 128. As the shaft 128 rotates, it unthreads the stroke tube 142 causing the impeller shaft 64 to lower. Clutch 140 is disengaged or adjusted to slip when the impeller 30 reaches the desired depth in the filter.

The impeller 30 is raised by first reversing the threaded shaft motor 136. Clutch 140 then engages the threaded shaft 128 which now threads into the stroke tube 142. The clutch 140 is disengaged or adjusted to slip when the impeller 30 reaches its desired height.

The description of the preferred embodiments was meant to be illustrative not exhaustive of the invention.

## Claims

1. "A nutsche filter comprising:
(a) an enclosed filter vessel (16) including a laterally disposed filter plate, a drain in the bottom and an opening (55) in the top;
(b) an impeller (30) and a tubular drive and impeller shaft assembly (28), said impeller (30) being laterally disposed within the filter vessel (16) above said filter plate, the tubular impeller shaft (64) attached at its lower end to the impeller (30) and extending up through the opening (55) in the vessel (16) in rotatable and axially slidable, sealed relation,
(c) a hollow drive shaft (24) mounted within the tubular impeller shaft (64) in corotatable and axially slidable relation;
(d) a first power drive transmission (20,22;122) coupled to the hollow drive shaft (24) operable to rotate said hollow drive shaft (24) about its longitudinal axis;
(e) a drive housing (14) vertically mounted around the opening (55),
characterised in that
(f) the drive housing (14) and hollow drive shaft (24) are in vertically fixed positions,
(g) there is a reversible second power drive transmission (25,50;136,138,140) capable of being coupled to the impeller shaft through the hollow drive shaft (24) and operable to telescope the impeller shaft (64) axially over the hollow drive shaft (24),
(h) the upper end of the tubular impeller shaft is enclosed within the drive housing (14).

2. Nutsche filter according to claim 1, wherein the second power transmission comprises a hydraulic powered drive (12, 25, 50).

3. Nutsche filter according to claim 2, wherein a reversible hydraulic fluid circuit supplied by a hydraulic power source (25) is provided in the hollow drive shaft (24) which conveys hydraulic fluid up ad down this drive shaft (24) to effect vertical movement of the impeller shaft (64).

4. Nutsche filter according to claim 3, wherein the hydraulic fluid up and down flow occurs in two separate flow conduits (36, 42; 38) established in the drive shaft (24) by means of a bore (34), these two flow conduits being separated by a tube (48) within the drive shaft (24).

5. Nutsche filter according to claim 4, wherein said tube (48) is adapted to apply hydraulic power via a first conduit (38) to the impeller shaft (64) to move the impeller shaft (64) within a guide assembly (26) axially in a first direction, and a second conduit (36, 42, 112) is adapted to apply hydraulic power to the impeller shaft (64) to move the impeller shaft (64) axially in a direction opposite to the first direction.

6. Nutsche filter according to claim 4, in which the bore (34) of the drive shaft (24) defines an upper stage (36) of relatively large diameter ad a lower stage (38) of relatively small diameter positioned below the second conduit (42), and the tube (48) extending down the two stages and sized to fit closely within said lower stage (38) and separating the two stages (36, 38) of the bore (34), a radial passageway (42) of the drive shaft (24) being in fluid communication with the upper stage (36) of the bore (34) and with an annular space (112) which defines the lower end of a sleeve (62) vertically moveable with the impeller shaft (64).

7. Nutsche filter according to claim 1, further comprising:
a motor (20) rotatably coupled to the drive shaft (24);
a sleeve (62) slidably and co-rotatably disposed on the drive shaft (24); and
as means for controllably moving the sleeve (62) together with the impeller shaft (64) along the drive shaft (24) the hydraulically actuated system (25, 48, 36, 38, 42, 58, 112).

8. Nutsche filter according to claim 7, further including a speed reducer (22) disposed between the motor (20) and the drive shaft (24) and rotatively coupled to the motor (20) and the drive shaft (24).

9. Nutsche filter according to claim 7, which further comprises a spline connection (40, 74) between the drive shaft (24) and the sleeve (62).

10. Nutsche filter according to claim 8, wherein the motor (20) and the speed reducer (22) are hydraulically actuated and the splined sleeve (62) engages the splined drive shaft (24) in co-rotatable and axially slidable relation.

11. Nutsche filter according to claim 1, wherein the drive shaft (24) comprises:
(a) at least one longitudinal external spline (40);
(b) as fluid conduit a two stage bore (34) in which an upper stage (36) is greater in diameter than a lower stage (38);
(c) at least one passageway (42) penetrating the wall of drive shaft (24);
(d) a shoulder (44) resting on a locating ring (10) fixed to the guide assembly (26) which is attached to the vessel (16); and
(e) threads disposed at the bottom of drive shaft (24) for receiving a locating ring (104) and a nut (106).

12. Nutsche filter according to claim 1, comprising:
(a) a top flange (78) disposed around the drive shaft (24) on axially slidable, sealed relation;
(b) a sleeve (62) disposed around the drive shaft (24) attached to the top flange (60) at its upper end and having at least one internal spline (74) at the other end engageable with the splined drive shaft (24); and
(c) the hollow impeller shaft (64) disposed around the sleeve (62) having a top end attachable with the sleeve to the upper flange (60);
a guide flange (54) being connected to the vessel (16) and disposed around the impeller shaft (64) in sliding and rotatable relation, said guide flange (54) being adapted to close an opening in the nutsche filter for the impeller shaft (64);
a packing assembly (98) being disposed around the drive shaft (24) below said passageway (42) and adapted to seal the annular space between the drive shaft (24) and the impeller shaft (64) below the sleeve (62);
a packing (102) being disposed between the drive shaft (24) below its shoulder (44) and the impeller shaft (64); and
a nut (106) being threaded on threads of the shaft (24) and holding the packing assembly (98) in its place.

13. Nutsche filter according to claim 1, wherein the second power transmission comprises a mechanical power transmission.

14. Nutsche filter according to claim 13, wherein a screw actuated drive unit (136, 140) engages a two piece shaft (120) for vertical displacement of the impeller shaft (64).

15. Nutsche filter according to claim 14, wherein the two piece shaft (120) includes a drive shaft (126) and a threaded shaft (128) being rotatably disposed in a bore of the drive shaft (126), the shafts (126) and (128) being capable to rotate independently of one another.

16. Nutsche filter according to claim 15, wherein the threaded shaft (128) includes a collar (132) and a threaded section (134), a bushing (148) being connected to the bottom of the drive shaft 8126) and adapted to receive a threaded stroke tube (142).

17. Nutsche filter according to claim 16, wherein the threaded stroke tube 8142) is connected at its lower end to a base plate (144) sealing the bottom of the impeller shaft (64), its other end extending through the bushing (148) including internal threads adapted to receive the threaded portion (134) of the threaded shaft (128), the stroke tube (142) being capable to screw axially within said annular bore (120) for axially lifting or lowering the impeller shaft (64).

18. Nutsche filter according to claim 15, wherein
the bushing (148) is mounted around the lower end of the drive shaft (24) below the lower end of the sleeve (62) and adapted to fit within the impeller shaft (64) in a sliding relation; and the threaded shaft (128) is disposed within the hollow drive shaft (126) in rotatable relation to define the annular space within said drive shaft (126).

## Patentansprüche

1. Ein Kutsche-Filter, aufweisend:
(a) einen geschlossenen Filterbehälter (16), der eine seitlich angeordnete Filterplatte, einen Auslaß im Boden und eine Öffnung (55) im Oberteil umfaßt;
(b) ein Flügelrad (30) und einen rohrförmigen Antrieb und eine Flügelrad-Wellenanordnung (28), wobei das Flügelrad (30) lateral innerhalb des Filterbehälters (16) über der genannten Filterplatte angeordnet ist, wobei die rohrförmige Flügelradwelle (64) an ihrem oberen Ende am Flügelrad (30) befestigt ist und sich nach oben durch die Öffnung (55) in dem Behälter (16) in einer dazu drehbaren und axial verschiebbaren, abgedichteten Weise erstreckt;
(c) eine hohle Antriebswelle (24), die in der rohrförmigen Flügelradwelle (64) zusammen in drehbarer und axial gleitfähiger Weise montiert ist;
(d) einen ersten Kraftübertragungsantrieb ( 20, 22; 122), der an die hohle Antriebswelle (24) betrieblich angekuppelt ist, um die genannte hohle Antriebswelle (24) um ihre Längsachse in Drehung zu versetzen;
(e) ein Antriebsgehäuse (14), das vertikal um die Öffnung (55) herum montiert ist;
**dadurch gekennzeichnet, daß**
(f) das Antriebsgehäuse (14) und die hohle Antriebswelle (24) sich in vertikal festen Positionen befinden;
(g) ein reversibler zweiter Kraftübertragungsantrieb (25, 50; 136, 138, 140) vorhanden ist, der in der Lage ist, durch die hohle Antriebswelle (24) hindurch an die Flügelradwelle angekuppelt zu werden und betrieblich dazu dient, die Flügelradwelle (64) axial über die hohle Antriebswelle (24) zu teleskopieren; und
(h) das obere Ende der rohrförmigen Flügelradwelle im Antriebsgehäuse (14) aufgenommen ist.

2. Nutsche-Filter nach Anspruch 1, bei dem die zweite Kraftübertragung einen hydraulisch angetriebenen Antrieb (12, 25, 50) umfaßt.

3. Nutsche-Filter nach Anspruch 2, bei dem eine reversible hydraulische Fluidschaltung, die von einer hydraulischen Kraftquelle (25) versorgt wird, in der hohlen Antriebswelle (24) vorgesehen ist, die hydraulisches Fluid aufwärts und abwärts dieser Antriebswelle (24) befördert, um vertikale Bewegung der Flügelradwelle (64) zu bewirken.

4. Nutsche-Filter nach Anspruch 3, bei dem die Aufwärts- und Abwärtsströmung des hydraulischen Fluids in zwei getrennten Durchflußkanälen (36, 42; 38) auftritt, die in der Antriebswelle (24) durch eine Bohrung (34) ausgebildet werden, wobei diese beiden Durchflußkanäle durch ein Rohr (48) in der Antriebswelle (24) voneinander getrennt sind.

5. Nutsche-Filter nach Anspruch 4, bei dem das genannte Rohr (48) so beschaffen ist, daß es hydraulische Kräfte durch einen ersten Kanal (38) an die Flügelradwelle (64) anlegt, um die Flügelradwelle (64) innerhalb einer Führungsanordnung (26) axial in einer ersten Richtung zu bewegen, und wobei ein zweiter Kanal (36, 42, 112) ausgebildet ist, um hydraulische Leistung an die Flügelradwelle (64) anzulegen, um die Flügelradwelle (64) axial in einer Richtung zu bewegen, die der ersten Richtung entgegengesetzt ist.

6. Nutsche-Filter nach Anspruch 4, bei dem die Bohrung (34) der Antriebswelle (24) einen oberen Abschnitt (36) relativ großen Durchmessers und einen unteren Abschnitt (38) relativ kleinen Durchmessers definiert, der unter dem zweiten Kanal (42) positioniert ist, und daß das Rohr (48) sich über die zwei Stufen hinweg nach unten erstreckt und so bemessen ist, daß es sich eng in den genannten unteren Abschnitt (38) einpaßt und die beiden Abschnitte (36, 38) der Bohrung (34) voneinander trennt, wobei ein radialer Verbindungsweg (42) der Antriebswelle (24) in Fluidverbindung mit dem oberen Abschnitt (36) der Bohrung (34) und mit einem ringförmigen Raum (112) steht, der das untere Ende einer Hülse (62) definiert, die vertikal mit der Flügelradwelle (64) beweglich ist.

7. Nutsche-Filter nach Anspruch 1, weiter aufweisend:
einen Motor (20), der drehbar an die Antriebswelle (24) angekuppelt ist;
eine Hülse (62), die gleitfähig und mitdrehend auf der Antriebswelle (24) angebracht ist; und
Mittel zum Steuern und Bewegen der Hülse (62) zusammen mit der Flügelradwelle (64) entlang der Antriebswelle (24) des hydraulischen Betätigungssystems (25, 48, 36, 38, 42, 58, 112).

8. Nutsche-Filter nach Anspruch 7, das weiter einen Drehzahlreduzierer (22) umfaßt, der zwischen dem Motor (20) und der Antriebswelle (24) angeordnet und drehbar an den Motor (20) und die Antriebswelle (24) angekuppelt ist.

9. Nutsche-Filter nach Anspruch 7, das weiter eine Keilverbindung (40, 74) zwischen der Antriebswelle (24) und der Hülse (62) aufweist.

10. Nutsche-Filter nach Anspruch 8, bei dem der Motor (20) und der Drehzahlreduzierer (22) hydraulisch betätigt werden, und die keilfixierte Hülse (62) die keilfixierte Antriebswelle (24) in mitdrehender und axial gleitfähiger Zuordnung kuppelt

11. Nutsche-Filter nach Anspruch 1, bei dem die Antriebswelle (24) aufweist:
(a) mindestens ein longitudinales, externes Keilelement (40);
(b) eine aus zwei Abschnitten bestehende Bohrung (34) als Fluidkanal, bei der ein oberer Abschnitt (36) im Durchmesser größer als ein unterer Abschnitt (38) ist;
(c) mindestens einen Verbindungsweg (42), der die Wand der Antriebswelle (24) durchdringt;
(d) eine Schulter (44), die auf einem Plazierungsring (10) ruht, der an der Führungsanordnung (26) befestigt ist, die am Behälter (16) angebracht ist; und
(e) Gewinde am unteren Ende der Antriebswelle (24) zum Aufnehmen eines Plazierungsringes (104) und einer Mutter (106).

12. Nutsche-Filter nach Anspruch 1, aufweisend:
(a) einen oberen Flansch (78), der um die Antriebswelle (34) in axial gleitbarer, abgedichteter Weise angeordnet ist;
(b) eine Hülse (62), die um die Antriebswelle (24) herum angeordnet ist und an dem oberen Flansch (60) an seinem oberen Ende befestigt ist und mindestens ein inneres Keilelement (74) am anderen Ende besitzt, das mit der keilfixierten Antriebswelle (24) kuppelbar ist; und
(c) die hohle Flügelradwelle (64) um die Hülse (72) herum angeordnet ist und ein oberes Ende besitzt, das mit der Hülse an dem oberen Flansch (60) befestigbar ist;
einen Führungsflansch (54), der mit dem Behälter (16) verbunden ist und um die Flügelradwelle (64) in gleitender und drehbarer Weise angeordnet ist, wobei der Führungsflansch (54) so ausgebildet ist, daß er eine Öffnung im Nutsche-Filter für die Flügelradwelle (64) schließt; und
eine Dichtungsanordnung (98), die um die Antriebswelle (24) unter dem genannten Verbindungsweg (42) angebracht und so ausgebildet ist, daß sie den Ringraum zwischen der Antriebswelle (24) und der Flügelradwelle (64) unter der Hülse (62) abdichtet;
eine Dichtung (102), die zwischen der Antriebswelle (24) unter ihrer Schulter (44) und der Flügelradwelle (64) angeordnet ist; und
eine Mutter (106), die auf Gewinde der Welle (24) geschraubt ist und die Dichtungsanordnung (98) an ihrem Platz hält.

13. Nutsche-Filter nach Anspruch 1, bei dem die zweite Kraftübertragung eine mechanische Kraftübertragung umfaßt.

14. Nutsche-Filter nach Anspruch 13, bei dem eine schraubenbetätigte Antriebseinheit (136, 140) an einer zweiteiligen Welle (120) für die vertikale Verschiebung auf der Flügelradwelle (64) angreift.

15. Nutsche-Filter nach Anspruch 14, bei dem die zweiteilige Welle (120) eine Antriebswelle (126) und eine mit Gewinde versehene Welle (128) aufweist, die drehbar in einer Bohrung der Antriebswelle (126) angeordnet ist, wobei die Wellen (126) und (128) in der Lage sind, unabhängig voneinander zu drehen.

16. Nutsche-Filter nach Anspruch 15, bei dem die mit Gewinde versehene Welle (128) einen Kragen (132) und einen Gewindeabschnitt (134) umfaßt, wobei eine Buchse (148) mit dem unteren Ende der Antriebswelle (126) verbunden und so ausgebildet ist, daß sie ein mit Gewinde versehenes Hubrohr (142) aufnimmt.

17. Nutsche-Filter nach Anspruch 16, bei dem das mit Gewinde versehene Hubrohr (142) an seinem unteren Ende an eine Basisplatte (144) angeschlossen ist, die den Boden der Flügelradwelle (64) abdichtet, wobei sein anderes Ende sich durch die Buchse (148) hindurch erstreckt und innere Gewinde umfaßt, die so ausgebildet sind, daß sie den mit Gewinde versehenen Abschnitt (134) der mit Gewinde versehenen Welle (128) aufnimmt, wobei das Hubrohr (142) in der Lage ist, sich axial in die genannte ringförmige Bohrung (120) zum axialen Anheben oder Absenken der Flügelradwelle (64) einzuschrauben.

18. Nutsche-Filter nach Anspruch 15, bei dem die Buchse (148) um das untere Ende der Antriebswelle (24) unterhalb des unteren Endes der Hülse (62) angebracht und so ausgebildet ist, daß sie sich in die Flügelradwelle (64) in einer gleitenden Weise einpaßt; und
die mit Gewinde versehene Welle (128) in der hohlen Antriebswelle (126) in drehbarer Weise so angeordnet ist, daß sie den Ringraum in der Antriebswelle (126) definiert.

## Revendications

1. Filtre Nutsche comportant :
(a) un récipient de filtre enfermé (16) comportant une plaque de filtre agencée latéralement, une évacuation dans la partie inférieure et une ouverture (55) dans la partie supérieure ;
(b) une palette (30) et un ensemble d'arbre de palette et d'entraînement tubulaire (28), ladite palette (30) étant agencée latéralement dans le récipient de filtre (16) au-dessus de ladite plaque de filtre, l'arbre de palette (64) étant fixé à son extrémité inférieure sur la palette (30) et s'étendant à travers l'ouverture (55) du récipient (16) d'une manière étanche, axialement coulissante et rotative,
(c) un arbre d'entraînement creux (24) monté dans l'arbre de palette (64) d'une manière axialement coulissante et rotative ;
(d) une première transmission d'entraînement (20, 22 ; 122) reliée à l'arbre d'entraînement creux (24) pouvant être actionnée pour entraîner en rotation ledit arbre d'entraînement creux (24) autour de son axe longitudinal ;
(e) un boîtier d'entraînement (14) monté verticalement autour de l'ouverture (55),
caractérisé en ce que
(f) le boîtier d'entraînement (14) et l'arbre d'entraînement creux (24) sont dans des positions verticalement fixes,
(g) il existe une seconde transmission d'entraînement réversible (25, 50 ; 136, 138, 140) capable d'être reliée à l'arbre de palette par l'intermédiaire de l'arbre d'entraînement creux (24) et pouvant être actionnée pour étendre l'arbre de palette (64) axialement par-dessus l'arbre d'entraînement creux (24),
(h) l'extrémité supérieure de l'arbre de palette est enfermée dans le boîtier d'entraînement (14).

2. Filtre Nutsche selon la revendication 1, dans lequel la seconde transmission comporte un entraînement alimenté hydrauliquement (12, 25, 50).

3. Filtre Nutsche selon la revendication 2, dans lequel un circuit de fluide hydraulique réversible alimenté par une source d'alimentation hydraulique (25) est agencé dans l'arbre d'entraînement creux (24) qui transporte le fluide hydraulique vers le haut et vers le bas de cet arbre d'entraînement (24) pour entraîner un mouvement vertical de l'arbre de palette (64).

4. Filtre Nutsche selon la revendication 3, dans lequel l'écoulement vers le haut et vers le bas du fluide hydraulique apparaît dans deux conduits d'écoulement séparés (36, 42 ; 38) établis dans l'arbre d'entraînement (24) par l'intermédiaire d'un alésage (34), ces deux conduits d'écoulement étant séparés par un tube (48) situé dans l'arbre d'entraînement (24).

5. Filtre Nutsche selon la revendication 4, dans lequel ledit tube (48) est adapté pour appliquer une puissance hydraulique via un premier conduit (38) sur l'arbre de palette (64) pour déplacer l'arbre de palette (64) dans un ensemble de guidage (26) axialement dans une première direction, et un second conduit (36, 42, 112) est adapté pour appliquer une puissance hydraulique sur l'arbre de palette (64) pour déplacer l'arbre de palette (64) axialement dans une direction opposée à la première direction.

6. Filtre Nutsche selon la revendication 4, dans lequel l'alésage (34) de l'arbre d'entraînement (24) définit un étage supérieur (36) ayant un diamètre relativement important et un étage inférieur (38) ayant un diamètre relativement petit positionné en dessous du second conduit (42), et le tube (48) s'étendant vers le bas des deux étages et étant dimensionné pour s'agencer de manière étroite dans ledit étage inférieur (38) et séparant les deux étages (36, 38) de l'alésage (34), un passage radial (42) de l'arbre d'entraînement (24) étant en communication hydraulique avec l'étage supérieur (36) de l'alésage (34) et étant muni d'un espace annulaire (112) qui définit l'extrémité inférieure d'un manchon (62) mobile verticalement avec l'arbre de palette (64).

7. Filtre Nutsche selon la revendication 1, comportant de plus :
un moteur (20) relié de manière rotative à l'arbre d'entraînement (24) ;
un manchon (62) agencé de manière coulissante et mutuellement rotative sur l'arbre d'entraînement (24) ; et
le système actionné hydrauliquement (25, 48, 36, 38, 42, 58, 112) en tant que moyens pour déplacer de manière commandée le manchon (62) avec l'arbre de palette (64) le long de l'arbre d'entraînement (24).

8. Filtre Nutsche selon la revendication 7, comportant de plus un réducteur de vitesse (22) agencé entre le moteur (20) et l'arbre d'entraînement (24) et relié de manière rotative au moteur (20) et à l'arbre d'entraînement (24).

9. Filtre Nutsche selon la revendication 7, qui comporte de plus une liaison cannelée (40, 74) entre l'arbre d'entraînement (24) et le manchon (62).

10. Filtre Nutsche selon la revendication 8, dans lequel le moteur (20) et le réducteur de vitesse (22) sont actionnés hydrauliquement et le manchon cannelé (62) vient en prise avec l'arbre d'entraînement cannelé (24) d'une manière axialement coulissante et mutuellement rotative.

11. Filtre Nutsche selon la revendication 1, dans lequel l'arbre d'entraînement (24) comporte :
(a) au moins une cannelure extérieure longitudinale (40) ;
(b) un alésage à deux étages (34), dans lequel un étage supérieur (36) a un plus grand diamètre qu'un étage inférieur (38), en tant que conduit de fluide ;
(c) au moins un passage (42) pénétrant dans la paroi de l'arbre d'entraînement (24) ;
(d) un épaulement (44) venant en appui sur un anneau de positionnement (10) fixé sur l'ensemble de guidage (26) qui est fixé sur le récipient (16) ; et
(e) des filets agencés à la partie inférieure de l'arbre d'entraînement (24) pour recevoir un anneau de positionnement (104) et un écrou (106).

12. Filtre Nutsche selon la revendication 1, comportant :
(a) un rebord supérieur (78) agencé autour de l'arbre d'entraînement (24) d'une manière étanche, axialement coulissante ;
(b) un manchon (62) agencé autour de l'arbre d'entraînement (24) fixé sur le rebord supérieur (60) à son extrémité supérieure et ayant au moins une cannelure intérieure (74) au niveau de l'autre extrémité pouvant venir en prise avec l'arbre d'entraînement cannelé (24) ; et
(c) l'arbre de palette creux (64) agencé autour du manchon (62) ayant une extrémité supérieure pouvant être fixée avec le manchon sur le rebord supérieur (60) ;
un rebord de guidage (54) étant relié au récipient (16) et agencé autour de l'arbre de palette (64) selon une relation coulissante et rotative, ledit rebord de guidage (54) étant adapté pour fermer une ouverture du filtre Nutsche pour l'arbre de palette (64) ;
un ensemble de garniture (98) étant agencé autour de l'arbre d'entraînement (24) en dessous dudit passage (42) et étant adapté pour assurer l'étanchéité de l'espace annulaire existant entre l'arbre d'entraînement (24) et l'arbre de palette (64) situé en dessous du manchon (62) ;
une garniture (102) étant agencée entre l'arbre d'entraînement (24), en dessous de son épaulement (44), et l'arbre de palette (64) ; et
un écrou (106) étant vissé sur des filets de l'arbre (24) et maintenant l'ensemble de garniture (98) dans sa position.

13. Filtre Nutsche selon la revendication 1, dans lequel la seconde transmission comporte une transmission mécanique.

14. Filtre Nutsche selon la revendication 13, dans lequel une unité d'entraînement actionnée par vis (136, 140) vient en prise avec un arbre en deux parties (120) pour déplacer verticalement de l'arbre de palette (64).

15. Filtre Nutsche selon la revendication 14, dans lequel l'arbre en deux parties (120) comporte un arbre d'entraînement (126) et un arbre fileté (128) étant agencé de manière rotative dans un alésage de l'arbre d'entraînement (126), les arbres (126) et (128) étant capables de tourner indépendamment l'un de l'autre.

16. Filtre Nutsche selon la revendication 15, dans lequel l'arbre fileté (128) comporte un collier (132) et un tronçon fileté (134), une rondelle (148) étant reliée à la partie inférieure de l'arbre d'entraînement (126) et étant adaptée pour recevoir un tube à course vissée (142).

17. Filtre Nutsche selon la revendication 16, dans lequel le tube à course vissée (142) est relié à son extrémité inférieure à une plaque de base (144) assurant l'étanchéité de la partie inférieure de l'arbre de palette (64), son autre extrémité s'étendant à travers la rondelle (148) comportant des filets intérieurs adaptés pour recevoir la partie filetée (134) de l'arbre fileté (128), le tube à course (142) étant capable d'être vissé axialement dans ledit alésage annulaire (120) pour élever ou abaisser axialement l'arbre de palette (64).

18. Filtre Nutsche selon la revendication 15, dans lequel
la rondelle (148) est montée autour de l'extrémité inférieure de l'arbre d'entraînement (24) en dessous de l'extrémité inférieure du manchon (62) et est adaptée pour s'agencer dans l'arbre de roue (64) selon une relation coulissante ; et
l'arbre fileté (128) est agencé dans l'arbre d'entraînement creux (126) selon une relation rotative pour définir l'espace annulaire existant dans ledit arbre d'entraînement (126).
